(19) Europäisches Patentamt
European Patent Office
Office européen des brevets

(11) **EP 3 214 945 B1**

(12) **EUROPEAN PATENT SPECIFICATION**

(45) Date of publication and mention
of the grant of the patent:
**06.02.2019 Bulletin 2019/06**

(51) Int Cl.:
**A23K 50/00** (2016.01)

(21) Application number: **15787207.8**

(86) International application number:
**PCT/EP2015/075173**

(22) Date of filing: **29.10.2015**

(87) International publication number:
**WO 2016/071209 (12.05.2016 Gazette 2016/19)**

(54) **PALATABLE DRY CAT FOODS AND METHODS FOR PREPARATION THEREOF**

WOHLSCHMECKENDES KATZENTROCKENFUTTER UND VERFAHREN ZUR HERSTELLUNG
DAVON

ALIMENTS SECS SAPIDES POUR CHAT ET LEURS PROCÉDÉS DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.11.2014 EP 14306758**

(43) Date of publication of application:
**13.09.2017 Bulletin 2017/37**

(73) Proprietor: **Spécialités Pet Food
56250 Elven (FR)**

(72) Inventors:
• **BLANVILLE-ONNO, Marine
F-56000 Vannes (FR)**

• **LACOTTE, Caroline
F-56000 Vannes (FR)**
• **DE RATULD, Aurélie
F-56880 Ploeren (FR)**

(74) Representative: **Regimbeau
20, rue de Chazelles
75847 Paris Cedex 17 (FR)**

(56) References cited:
WO-A2-2006/074088    US-A1- 2003 060 503
US-A1- 2004 022 828    US-A1- 2004 096 480
US-A1- 2006 240 169    US-A1- 2006 257 522
US-A1- 2009 104 315    US-A1- 2012 093 986
US-B1- 6 475 512

**Description**

The present invention generally relates to the field of pet food.

More precisely, the present invention concerns a palatable dry food for cats, wherein said food is characterized by both a specific ingredient formulation and a specific nutritional composition.

The present invention further concerns a method for preparing such a palatable dry cat food.

BACKGROUND OF THE INVENTION

The worldwide pet food market extends continuingly due to a pet population that becomes larger and larger over time, especially in developed countries.

Facing thus an increasing public demand for pet foods, the pet food industry looks for supplying foods which have a high nutritional value and a high degree of palatability, with competitive production costs.

There is a wide range of pet foods available on the market. These pet foods may be classified in different categories depending on their consumption purpose: (a) complete diets, (b) complementary diets, and (c) snacks, treats, and edible toys. Complete diets are designed to be fed in addition to water for an extended period of time as the sole source of nutrients; they are thus expected to meet all the energetic and nutrient requirements of the animal. Complementary diets are not sufficient alone to ensure that all nutrient and energy needs are provided for; they thus have to be combined with other diets. Snacks, treats, and edible toys are appetizers or rewards that are offered from time to time by the pet owner to the animal.

Concerning more specifically complete diets, they can in turn be classified in three main categories depending on their moisture content, which is either low or medium or high:

-    dry or low moisture-containing products (having less than about 14% moisture): they usually produce a crunching sound when chewed by pets; they are generally highly nutritious, may be inexpensively packaged (e.g., in bags or boxes), and are highly convenient to store and use; they are relatively shelf-stable and resistant to microbial or fungal deterioration or contamination;

-    canned or wet or high moisture-containing products (having more than about 50% moisture): typically high meat-containing products, they are usually costly to produce and package (mainly in cans); they are not shelf-stable when opened so that excess or unused wet food must be refrigerated to prevent microbial or fungal spoilage; and

-    semi-moist or semi-dry or soft dry or soft moist or intermediate or medium moisture-containing products (having from about 14 to about 50% moisture): they are usually packaged in appropriate bags or boxes; they contain stabilizing agents and can thus be stored in the same way as dry products.

Dry and semi-dry pet foods are generally preferred by manufacturers and pet owners alike because they are more convenient to store and use. However, many animals, and particularly cats, are picky eaters desiring a high degree of palatability.

There is thus a continuing need for new palatable food products for cats, which provide a robust flavour and which are easily and cost-effectively (i) manufactured by the pet food industry and (ii) usable by cats' owners.

There are many documents concerned with cat food palatability and methods to redress or increase it, like: US 2003/060503, US 2006/240169, US 2006/257522, WO 2006/074088, US 2009/104315, US 6 475 512, US 2004/096480, US 2004/022828 and US 2012/093986.

The present invention here provides new combinations of ingredient formulations and nutritional compositions that have been selected for their ability to provide palatable dry cat foods.

SUMMARY OF THE INVENTION

It is provided herein a palatable dry food for cats, wherein said food is characterized by both a specific ingredient formulation and a specific nutritional composition.

It is further provided a method for preparing such a palatable dry cat food.

It is yet further provided a method for feeding cats using the palatable dry cat foods of the present invention.

DESCRIPTION OF THE INVENTION

DEFINITIONS

Unless specifically stated otherwise, percentages are expressed herein by weight of a product reference (in particular, a dry cat food product).

In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a food" includes a plurality of such "methods" or "foods". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

The methods and compositions and other embodiments exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the invention, or in the field(s) where the term is used. The preferred compositions, methods, articles of manufacture, or other means or materials are described herein.

The term "about" as used herein when referring to a measurable value such as an amount, a temporal duration, and the like, is meant to encompass variations of $\pm 5\%$, more preferably $\pm 2\%$, even more preferably $\pm 1\%$ from the specified value, as such variations are appropriate to reproduce the disclosed methods and products.

In the context of the present invention, the term "adult cat" means cats with the exception of kittens, the kittens being cats having less than 12 months. Accordingly, the term "adult cats" herein refers to cats having at least 12 months, and preferably having more than 12 months.

As used herein, the term "palatability" or "palatability effect" refers to the overall willingness of a pet to eat a certain pet food. Whenever a pet shows a preference, for example, for one of two or more pet foods, the preferred pet food is more "palatable", and has "enhanced palatability". Such preference can arise from any of the pet's senses, but typically is related to, *inter alia,* taste, aroma, flavour, texture, smell and/or mouth feel.

Different methods exist to determine a palatability effect. Examples of such methods involve exposure of pets to pet foods either simultaneously (for example, in side-by-side, free-choice comparisons, e.g., by measuring relative consumption of at least two different pet foods), or sequentially (e.g., using single bowl testing methodologies). At least two different methods may be used to consolidate the thus obtained results on the palatability effect of a given pet food.

The term "food" or "diet" as used herein means a product or composition that is eaten by an animal and provides at least one nutrient to the animal. More specifically, a "food" is here a "nutritionally-balanced food".

A "nutritionally-complete", "nutritionally-balanced" or "complete and nutritionally-balanced food" or "complete diet" is one that contains all known required nutrients for the intended recipient or consumer of the food, in appropriate amounts and proportions based, for example, on recommendations of recognized or competent authorities in the field of companion animal nutrition. Such foods are therefore capable of serving as a sole source of dietary intake to maintain life or promote production, without the addition of supplemental nutritional sources.

The term "cat food" means a product intended for consumption by a cat.

Pet foods, such as cat foods, are generally classified depending on their moisture content, which is either low or medium or high. In particular, dry products have less than about 14% moisture. Typical dry pet foods are kibbles.

The term "kibble" used herein refers to particulate chunks or pieces formed by either a pelleting or extrusion process. The pieces can vary in sizes and shapes, depending on the process or the equipment. For instance, kibbles can have spherical, cylindrical, oval, or similar shapes.

"Palatability enhancers" (PEs), or "palatants", or "palatability agents", or "appetizing factors", and any other similar terms mean any material that enhances the palatability of a food product to an animal. A PE may be a single material or a blend of materials, and it may be natural, processed or unprocessed, synthetic, or part of natural and part of synthetic materials. Typically, a PE for animal food is a liquid or dry edible composition that provides a taste, aftertaste, smell, mouth feel, texture, and/or organoleptic sensation that is pleasant to the target animal.

"Macronutrients" are understood herein to mean protein, carbohydrate, fat, and fiber. Protein could be of animal or vegetable origin. The same applies for the fat and carbohydrate macronutrients, which may be present in vegetable and/or animal form.

As used herein, the term "micronutrients" is intended to mean substances which the animal's metabolism needs to absorb, even though they do not supply energy. They serve, for example, to build up macromolecules or as cofactors for essential enzyme reactions. Micronutrients include fatty acids, amino acids, macrominerals, microminerals, vitamins and vitamin-like substances, to satisfy the essential nutrient requirements of animals, preferably cats, yet preferably adult cats.

The term "microminerals" or "mineral trace elements" means herein one or more selected from iron, zinc, manganese, selenium, iodine, and copper. "Microminerals" are different from "macrominerals", which term is used herein to encompass any one from calcium, phosphorus, sodium, magnesium, chloride, potassium, sulfur, and combinations thereof.

The term "yeast" herein encompasses any yeast, preferably inactive, as well as yeast by-products that are compatible with compositions for animal consumption.

As used herein, the term "meat tissue" means meat and meat by-products including carcass, bones, skin, offal, and muscle, that may be obtained directly from a slaughterhouse, thus being fresh, raw or frozen, but not being dried, cooked or boiled.

"Coating", as used herein, refers to the topical deposition of a palatability-enhancing composition onto the surface of a basal food composition, such as by spraying, dusting, and the like. A palatability-enhancing composition for use as a coating material in the pet food industry is typically a mixture of one or more palatability enhancers and fat.

"Inclusion" as used herein, refers to the addition of a palatability enhancer internally to a pet food preparation, by mixing it with other pet food ingredients, before further processing steps for obtaining the final pet food product (including thermal treatment and/or extrusion and/or retorting, etc.).

By the term "initial ration", it is meant herein the pet food ration specifically adjusted to a given pet based on its usual food consumption and its daily energy requirements.

DETAILED DESCRIPTION OF THE INVENTION

The inventors have found through an extensive series of dietary studies on adult domestic cats, based upon formulations with different ingredients (in nature and/or amount) and upon compositions with different nutritional constraints, that adult cats show preferences for specific ingredient formulations together with specific nutritional compositions.

The cat foods according to the present invention include macronutrients and micronutrients allowing to have nutritionally-balanced cat foods, that should satisfy all the nutrient needs of an adult cat. The food balance is determined according to the known dietary standards in the veterinary field, for example by following recommendations of the National research Council (NRC) or the guidelines of the American Association of Feed Control Officials (AAFCO).

The present invention is directed to cats, preferably adult cats.

In a first aspect, the present invention concerns a palatable dry cat food characterized by:

a) an ingredient formulation comprising at least, in % by weight of the dry cat food:

- from about 11 to about 22 % rice;
- from about 5 to about 22 % corn gluten;
- from about 8 to about 27 % poultry meal by-products;
- from about 3 to about 22 % corn;
- from about 0.9 to about 5 % whole dried eggs;
- from about 0.5 to about 5.5 % fiber source;
- from about 0.5 to about 5.5 % fish material;
- from about 0.9 to about 7 % yeast;
- from about 0.3 to about 5 % vitamins and/or microminerals and/or taurine; and

b) a nutritional composition comprising at least, in % by weight of the dry cat food:

- from about 3 to about 8.5 % moisture;
- from about 33 to about 42 % protein;
- from about 9.5 to about 18 % fat;
- from about 4 to about 10 % ashes;
- from about 4 to about 10.5 % total fibers; and
- from about 20 to about 30.5 % starch.

Preferably, said ingredient formulation defined in a) above comprises at least, in % by weight of the dry cat food:

- from about 0.9 to about 4 % whole dried eggs; and/or
- from about 0.5 to about 5%, preferably from about 1 to about 5% fiber source; and/or
- from about 0.5 to about 5 %, preferably from about 0.5 to about 4% fish material,

all other ingredient ranges being as set forth above.

For example, the palatable dry cat food according to present invention has a formulation comprising at least one of, in % by weight of the dry cat food:

- from about 12 to about 21 % rice;
- from about 6 to about 21 % corn gluten;
- from about 9 to about 26 % poultry meal by-products;
- from about 4 to about 21 % corn;
- from about 0.9 to about 3 % whole dried eggs;
- from about 1 to about 4 % fiber source;
- from about 1 to about 4 % fish material;
- from about 0.9 to about 5 % yeast; and
- from about 0.4 to about 4 % vitamins and/or microminerals and/or taurine.

Yet for example, the palatable dry cat food according to the present invention has a nutritional composition comprising at least one of, in % by weight of the dry cat food:

- from about 4 to about 8 % moisture;
- from about 33 to about 40 % protein;
- from about 9.5 to about 16 % fat;
- from about 5 to about 9 % ashes;
- from about 6 to about 10.5 % total fibers; and
- from about 21.5 to about 30 % starch.

With respect to the ingredient formulation:

(i) Rice is a cereal grain that may be used as a source of carbohydrates. Rice forms may be selected from whole rice, broken rice, rice semolina, rice flour, and the like, and any combinations thereof. Rice types may be selected from Indica, Japonica, and combinations thereof. Rice may be wild rice, brown rice, brewer's rice, and the like, and any combinations thereof.

(ii) Corn is a cereal grain that may be used as a source of carbohydrates. Corn forms may be selected from whole corn, broken corn, ground corn meal, corn flour, corn grits, corn flakes, and the like, and any combinations thereof.

(iii) Corn gluten or corn gluten meal is a by-product of the manufacture of maize starch (and sometimes ethanol). Corn gluten is a source of vegetable protein, with a standard protein level of at least about 58%.

(iv) Poultry meal by-products (or poultry by-product meal) are the ground, rendered, clean parts of the carcass of slaughtered poultry such as necks, heads, feet, undeveloped eggs, gizzards, and intestines (provided their content is removed), exclusive of feathers (except in such amounts as might occur unavoidably in good processing practices). Poultry by-product meal contains from about 58% to about 75% protein.

(v) Whole dried eggs are an excellent source of protein of animal origin. Egg protein has been used as the reference protein to which all other proteins have been compared for humans for many years. Whole dried eggs contain at least about 40% protein.

(vi) Fiber source or dietary fiber refers to food ingredients corresponding to components of a plant that are resistant to digestion by animal's digestive enzymes. Fiber can be soluble or insoluble. Soluble fiber is resistant to digestion and absorption in the small intestine, but undergoes complete or partial fermentation in the large intestine. Sources of soluble fiber for use in the diets disclosed herein include, but are not limited to, beet pulp, guar gum, chicory root, psyllium, pectin, carob flour, blueberry, cranberry, squash, apples, oats, beans, citrus, barley, and peas. Insoluble fibers are fibers that do not dissolve in water and tend to increase the rate at which food passes through the digestive tract. Sources of insoluble fiber include, but are not limited to, cellulose, wheat oat, corn bran, flax seed, grapes, celery, green beans, cauliflower, potato skins, fruit skins, vegetable skins, peanut hulls, and soy fiber.

(vii) Fish material encompasses fish meal, fish oil, and the like, and combinations thereof. Fish meal is obtained by cooking, pressing, drying, and milling fresh raw fish or fish trimmings. Fish meal is an excellent source of highly digestible protein, long chain omega-3 fatty acids (such as EPA and DHA). Fish oil is extracted from fishery materials prior to making fish meal. Fish oil is an excellent source of energy, vitamin A, vitamin D, and omega-3 fatty acids. Typical examples of fish oil are tuna oil, sardine oil, salmon oil, anchovy oil, and the like, and combinations thereof.

(viii) Yeasts are well known in the art as being protein-rich. Yeasts include, without limitation, brewer's yeast, baker's yeast, torula yeast, molasses yeast, and the like. Yeast by-products (that are also encompassed here by the term "yeast", as mentioned in the Definitions above) include, without limitation, yeast extracts, yeast hydrolyzates, cream yeasts, etc.

(ix) Vitamins are also included in the diets according to the present invention in specific amounts, to avoid deficiency and to maintain animal's health. Examples of vitamins include, without limitation, vitamin A, vitamin B1 (or thiamin), vitamin B2 (or riboflavin), vitamin B6 (or pyridoxine), vitamin B12 (or cobalamin), vitamin B3 (or niacin), vitamin B5 (or panthotenic acid), vitamin B9 (or folic acid), vitamin C (L ascorbic acid), vitamin D, vitamin E, vitamin H (biotin), vitamin K, vitamin B4 (or choline chloride), and combinations thereof.

(x) As defined above, microminerals are one or more selected from iron, zinc, manganese, selenium, iodine, and copper.

(xi) Taurine is a derivative compound from sulfur amino acids, and is required for healthy reproduction, healthy eyesight and hearing. Taurine is well-known and commonly used in the pet food industry, especially in cat food manufacturing.

With respect to the nutritional composition:

(i) Moisture refers to the water content of a given product, in particular here of the dry cat food according to the present invention. Water is known as the most important nutrient for life and plays a part in all major physiological functions.

(ii) Protein is any group of complex organic macromolecules that contain carbon, hydrogen, oxygen, nitrogen, and usually sulfur and are composed of one or more chains of amino acids. Proteins are fundamental components of all living cells and include many substances, that are necessary for the proper functioning of a living organism. They are essential in the diet of animals for the growth and repair of tissue and can be obtained from animal and/or vegetable sources.

(iii) Fat or lipid is a group of organic compounds, including fats, oils, waxes, sterols, and triglycerides, that are insoluble in water but soluble in nonpolar organic solvents. Fat, together with carbohydrates and proteins, constitute the principal structural material of living cells. Fat in food is a major source of energy. Fat can be obtained from animal and/or vegetable sources.

(iv) Ash or ashes refer to any inorganic material in food, such as minerals, corresponding to the residue that remains after burning, this burning removing water and organic material such as protein, fat, starch, and fibers.

(v) Total fiber or total dietary fiber includes soluble and insoluble fibers as described above.

(vi) Starch is a naturally abundant nutrient digestible carbohydrate, composed of thousands of glucose molecules linked together by simple chemical bonds. Starch is a source of energy and is found chiefly in the seeds, fruits, tubers, roots, and stem pith of plants, notably in corn, potatoes, wheat, barley, and rice.

In particular, the palatable dry cat food according to the present invention has a formulation that further comprises at least one of the following typical ingredients: meat tissue, pork meal by-products (or pork by-product meal), wheat, wheat gluten, pea protein concentrate, animal fat, soy flour, palatability enhancers, phosphoric acid, minerals, amino acids, antioxidants, and the like.

With respect to these additional ingredients that may be comprised in the cat food formulation:

(i) Meat tissue can be meat and/or meat by-products as defined above.

(ii) Pork meal by-products (or pork by-product meal) correspond to pork greaves meal, that is a high-protein meal obtained as a by-product from rendering or extraction of pork. Pork meal by-products contain at least about 55% protein.

(iii) Wheat is a cereal grain that may be used as a source of nutrients (e.g., proteins, starch, minerals, and vitamins). Wheat forms may be selected from whole wheat, broken wheat, ground wheat meal, wheat flour, wheat grits, wheat flakes, and the like, and any combinations thereof. When wheat is present in said ingredient formulation, then said dry cat food preferably comprises less than about 10 % wheat by weight. Yet preferably, said dry cat food comprises less than about 8 % wheat by weight.

(iv) Wheat gluten is the protein part of wheat and is a source of vegetable protein, with a standard protein level of at least about 58% protein.

(v) Pea protein concentrates are made by separating the protein fraction of pea seeds from the fiber and starch fractions. Several processes are known, yielding to products containing at least about 50 % protein.

(vi) Animal fats are fats of animal origin, excluding marine origin. Typical animal fats are tallow, lard, poultry fat, and the like, as well as by-products thereof. Also are encompassed herein the fats that are derived from animal sources, or that are produced by animals, with the exception of marine oils.

(vii) Soy flour is obtained by grinding soya beans. It is a source of vegetable proteins with a standard protein level of at least about 40% protein.

(viii) Examples of palatability enhancers are, without limitation, animal digests which result from chemical and/or enzymatic hydrolysis of clean, undecomposed animal tissue; Maillard reaction products which result of the mixtures of different ingredients that react together during a heat process; minerals such as phosphate salts; fats or lipids; and the like.

(ix) Phosphoric acid is an edible acid that can be used in pet food for different purposes such as antimicrobial agent, acidifying agent, and the like.

(x) Macrominerals are as defined above.

(xi) Amino acids are preferably selected from Arginine, Methionine, Lysine, and combinations thereof.

(xii) Antioxidants are fat preservatives from natural or synthetic origins, such as for example tocopherols, rosemary extract, BHA, BHT, Propyl gallate, Octyle gallate, and the like.

Palatability enhancers are conventionally used either by inclusion or by coating or both.

For example, palatability enhancers can be incorporated or included into the pet food preparation according to the following method. The palatability enhancer(s) is(are) contacted with the raw ingredients of the pet food preparation prior to cooking. In this case, the palatability enhancer(s) is(are) combined to proteins, fibre, carbohydrates and/or starch, etc., of the basal food preparation and is(are) cooked with those materials in the cooker-extruder.

In a preferred embodiment, the palatable dry cat food according to the present invention is coated with a palatability-enhancing composition.

For example, one can cite a method for coating dry pet foods such as kibbles. Kibbles of uncoated, extruded basal pet food can be placed in a container such a tub or a coating drum for mixing. A fat, such as pork fat or poultry fat, is heated and then sprayed onto the pet food in a manner to obtain a coating of the kibbles. The coating does not need to be a continuous layer, but is preferably uniform. After the fat, one or more palatability enhancers may be applied as either liquid(s) or dry powder(s), while mixing the product. A liquid palatability enhancer is typically sprayed on while a dry palatability enhancer is typically dusted on. Alternatively, palatability enhancers can be mixed with the fat and applied concurrently. Yet alternatively, palatability enhancers are coated before deposition of fat.

For clarity purposes, the mixture of one or more palatability enhancers and fat is herein referred to as a "palatability-enhancing composition". In particular, this palatability-enhancing composition, which combines fat and one or more palatability enhancers, may contain all or part only of the total amount of fat in the dry cat food and/or all or part only of the total amount of palatability enhancers in the dry cat food.

In another aspect, the present invention concerns a method for preparing a palatable dry cat food as described above, wherein said method comprises at least the steps of:

a) Mixing at least the following ingredients: rice, corn gluten, poultry meal by-products, corn, whole dried eggs, fiber source, fish material, yeast, vitamins and/or microminerals and/or taurine;

b) Extruding the thus obtained mixture; and

c) Drying the extrudate obtained in step b), thereby obtaining said palatable dry cat food.

Preferably, this method for preparing a palatable dry cat food further comprises a step d) of coating the dry cat food obtained in step c), with a palatability-enhancing composition, as described above.

Typically, dry pet foods such as kibbles can be prepared by different common methods. One of these methods, that is widely used, is a cooker-extruder method. In the cooker-extruder method, ingredients are first blended together to form an admixture. This admixture is transferred into a conditioner where it is sufficiently moistened to become extrudable. The admixture then enters a cooker-extruder where it is cooked at an elevated temperature and pressure and then forced out of the apparatus through a die. This die forms the extruder product into a specific shape. Individual pieces of food are created by periodically slicing off the end of the extruded stream of product. The individual pieces are then dried in a hot air dryer. Generally, the product is dried until it contains less than 14% moisture, and preferably about 3 to 10% moisture. The dried particles or pieces are then transferred by bulk conveyor to a coating drum and sprayed with fat. Other liquids such as liquid palatability enhancers, and powders such as dry palatability enhancers may also be applied to the pieces as a coating material. In other words, the pieces may be globally coated by a palatability-enhancing composition comprising fat and one or more palatability enhancers, wherein said fat and said one or more palatability enhancers can be applied concomitantly, or sequentially, or at time intervals.

Yet in another aspect, the present invention relates to a method for feeding a cat, comprising:

a) feeding said cat with a palatable dry cat food as described above.

The above-described palatable cat foods provide significant advantages over the prior art. The effects of the present invention can be measured by tests such as single-bowl test (also called "monadic test") or "two-bowl test" (also called "versus test"). Of course, the person skilled in the art is free to use any other appropriate test than those herein described to determine preference or acceptability. Such alternative tests are well known in the art.

7

A- Principle of the monadic feeding trial:

In a "monadic test" or "monadic feeding trial" or "single-bowl test", only one pet food is given to pets at one given time, giving thus access to the acceptability of this specific pet food by the pet. When several pet foods are presented sequentially using monadic testing, the preference for one pet food compared to the other can be established by comparing the sequentially-collected data. Tests can be performed on panel of 40 cats, depending on the test's objectives.

A "monadic-based feeding trial" is either a conventional monadic feeding trial or an adjusted monadic feeding trial in order to maximize reliability and sensitivity. Such an adjusted monadic feeding trial can be a monadic feeding trial wherein, e.g.:

- Meal size is adjusted to individual pet needs (leading to the notion of "initial ration" as defined above); and/or
- Data over more than one meal are collected and processed; and/or
- Food orders are counterbalanced between meals when more than one food is tested.

Operating method of the test for evaluating one pet food:

- An appropriate amount of food is weighed out for each pet and placed in a feeding bowl. The offered amount enables the daily energy requirements of the pet to be met and is adjusted to each pet.
- The bowl is presented to the pet in a feeding system comprising all necessary equipment to collect, automatically or not, and preferably record the relevant data.
- Each pet has free access to its respective distributed food.
- For one pet food, the meal can last from 8 minutes to 24 hours, depending on protocols, and can be repeated over several days and/or several times per day.
- Only one pet food is available to the pet per meal.

Parameters studied: quantities of consumed pet food.

Statistical analysis:

A statistical analysis is performed, preferably a parametric analysis, yet preferably an analysis of variance with mixed effects if data are quantitative and a logistic regression with mixed effects if data are qualitative. Typically, a student's T-test for quantitative data or a chi$^2$ for qualitative data is done from these models to study the differences of each criterion for one pet food.

Typical significance levels for statistical tests are noted as below:

| NS | not significant | ($p > 0.05$) |
|----|----|----|
| * | significant | ($p \leq 0.05$) |
| ** | highly significant | ($p \leq 0.01$) |
| *** | very highly significant | ($p \leq 0.001$) |

B- Principle of the two-bowl test:

A "two-bowl test" or "two-pan test" or "versus test" enables one to determine preference of pets for one pet food compared simultaneously to another. A "versus test" is based on the postulate whereby the more food consumed, the more palatable it is. Tests can be performed on panel of 40 cats, depending on the test's objectives.

Operating method of the test:

- Identical amounts of food A and food B are weighed out and placed in identical bowls. The amount present in each ration enables the daily requirements of the pets to be met.
- Distribution of the bowls: the bowls are presented at the same time to each cat in an individual loose box and their positions are switched at each meal to avoid a choice led by handedness.

- Duration of the test: from about 8 minutes to about 24 hours (if one of the two bowls is entirely eaten before the end of the test, the two bowls are removed, and the test is stopped).
- Measured parameters: First food consumed ("initial appeal") and amount of each food consumed by the end of the test;
- Calculated parameters: individual consumption ratio in % (CR)

$$CR_A = \text{consumption of A (g)} \times 100/(\text{consumption of A+B) (g)}$$

$$CR_B = \text{consumption of B (g)} \times 100/(\text{consumption of A+B) (g)};$$

⇨ Average consumption ratio (ACR) = average of all individual ratios (an equal importance is given to each animal, regardless of its size and of its corresponding consumption).

If animals have higher or lower consumption compared to predetermined values (which are function of, e.g., the animal weight and/or metabolism), they are not taken into account into statistical treatment.

Statistical analysis

Statistical analysis is used to determine if there is a significant difference between the 2 ratios. A Student's t-test with 3 error thresholds, namely 5%, 1% and 0.1%, is performed.

Significance levels are noted as below:

| NS | not significant | $(p > 0.05)$ |
| * | significant | $(p \leq 0.05)$ |
| ** | highly significant | $(p \leq 0.01)$ |
| *** | very highly significant | $(p \leq 0.001)$ |

The present invention will be further described by reference to the following examples, which are presented for the purpose of illustration only and are not intended to limit the scope of the invention.

**EXAMPLES**

**EXAMPLE 1:** Tests with 3 cat food diets characterized by a specific ingredient formulation and by a specific nutritional composition, both according to the invention

In this example, three nutritionally-balanced food compositions in the form of kibbles, suitable for consumption by cats, and obtained after an extrusion process, were prepared. Those 3 cat foods were formulated in order to meet the AAFCO nutrient recommendations.

There were also formulated in a way to have a specific ingredient formulation comprising some specific ingredients, each present at a specific level, and a specific nutritional composition.

As shown in Table 1 below, the diets A, B, and C were formulated in order to have from about 11 to about 22 % rice, from about 5 to about 22 % corn gluten, from about 8 to about 27 % poultry meal by-products, from about 3 to about 22 % corn, from about 0.9 to about 5% whole dried eggs, from about 0.5 to about 5.5% fiber source, from about 0.5 to about 5.5 % fish material, from about 0.9 to about 7% yeast, from about 0.3 to about 5% vitamins and/or microminerals and/or taurine.

In addition, all the diets were characterized by a specific nutritional composition comprising at least, in % by weight of the diet, from about 3 to about 8.5% moisture, from about 33 to about 42% protein, from about 9.5 to about 18% fat, from about 4 to about 10% ashes, from about 4 to about 10.5% total fibers and from about 20 to about 30.5% starch.

Table 1 - Formulation of Cat diets A, B, and C

Ingredient compositions and nutrient analysis of 3 kibble formulas

| | Cat Diet A | Cat Diet B | Cat Diet C |
|---|---|---|---|
| **Ingredient composition** | | | |
| meat tissue | 21.076 | | |
| rice | 17.061 | 19.874 | 16.737 |
| corn gluten | 16.560 | 19.289 | 7.246 |
| poultry meal by-products | 15.957 | 24.258 | 16.830 |
| pork meal by-products | | | 15.895 |
| corn | 4.316 | 5.027 | 19.355 |
| wheat | 5.018 | 5.845 | |
| animal fat | 5.319 | 7.704 | 5.000 |
| dried whole eggs | 2.108 | 2.455 | 1.683 |
| fiber sources | 2.007 | 2.338 | 3.740 |
| pea protein concentrate | 1.907 | 2.221 | |
| fish material | 1.204 | 1.751 | 3.273 |
| palatability enhancer | 1.505 | 1.750 | 1.500 |
| yeast | 1.204 | 1.403 | 4.208 |
| phosphoric acid | | | 0.468 |
| macrominerals | 1.546 | 2.805 | 0.467 |
| antioxydants | 0.003 | 0.003 | 0.02 |
| Arg and/or Met and/or Lys[1] | 0.703 | 0.357 | 0.002 |
| Cat Premix[2] | 2.506 | 2.920 | 3.578 |
| | | | |
| **Nutrient analysis** | | | |
| Moisture (%) | 6.21 | 6.90 | 6.02 |
| Proteins (%) | 37.92 | 34.92 | 36.93 |
| Fat (%) | 14.4 | 14.99 | 10.94 |
| Ashes (%) | 8.02 | 7.20 | 8.21 |
| Total fibers (%) | 6.65 | 8.80 | 9.59 |
| Starch (%) | 22.97 | 23.80 | 23.00 |

[1]Arg: arginine; Met: methionine; Lys: lysine
[2]cat premix: vitamins, microminerals, and taurine

Palatability tests were thus performed to compare the 3 Cat diets A, B, and C, as follows.
a) A monadic feeding trial was performed with Cat diets A and C.
As shown in Table 2 below, average consumptions per meal were not significantly different between Cat Diet A and Cat diet C.

Table 2 - Monadic feeding trials - Results for Cat Diets A and C

| | average consumption of dry cat food (%/ initial ration) | average consumption of dry cat food per meal (g) | Statistical significance | Groups after pair wise comparison (mixed model) |
|---|---|---|---|---|
| Cat diet A | 80.0 | 26.2 | NS | A |
| Cat diet C | 80.2 | 26.1 | | A |

b) Versus tests were performed to compare the 3 Cat diets A, B, and C.
As shown in Table 3 below, consumptions were not significantly different between Cat diet A and Cat Diet B, and between Cat Diet A and Cat Diet C.

Table 3 - Versus tests - Results for Cat Diets A vs B and Cat Diets A vs C

| | day 1 | | | day 2 | | |
|---|---|---|---|---|---|---|
| | average consumption of dry cat food A (%) | average consumption of the dry cat food compared to A (%) | statistical significance | average consumption of dry cat food A (%) | average consumption of the dry cat food compared to A (%) | statistical significance |
| Cat Diets A vs B | 56 | 44 | NS | 57 | 43 | NS |
| Cat Diets A vs C | 46 | 54 | NS | 53 | 47 | NS |

This demonstrates that, even if the 3 diets' formulas are not strictly identical, a similar palatability could be obtained by combining a specific ingredient formulation and a specific nutritional composition, according to the invention.

**EXAMPLE 2:** Tests with 2 cat food diets characterized by different ingredient formulations and by different nutritional compositions: one diet is according to the invention and the other diet is not according to the invention

In this example, two nutritionally-balanced food compositions in the form of kibbles, suitable for consumption by cats, and obtained after an extrusion process, were prepared. Those 2 cat foods were formulated in order to meet the AAFCO nutrient recommendations.
There were also formulated in a way to have a specific ingredient formulation comprising some specific ingredients, each present at a specific level, and a specific nutritional composition.
As shown in Table 4 below, on the one hand, diet A was formulated in order to have from about 11 to about 22 % rice, from about 5 to about 22 % corn gluten, from about 8 to about 27 % poultry meal by-products, from about 3 to about 22 % corn, from about 0.9 to about 5% whole dried eggs, from about 0.5 to about 5.5% fiber source, from about 0.5 to about 5.5 % fish material, from about 0.9 to about 7% yeast, from about 0.3 to about 5% vitamins and/or microminerals and/or taurine.
In addition, diet A was characterized by a nutritional composition comprising at least, in % by weight of the diet, from about 3 to about 8.5% moisture, from about 33 to about 42% protein, from about 9.5 to about 18% fat, from about 4 to about 10% ashes, from about 4 to about 10.5% total fibers and from about 20 to about 30.5% starch.
On the other hand, diet D was formulated in order to have both an ingredient formulation and a nutritional composition that are different from the ones described above.

Table 4 - Formulations of Cat Diets A and D

| Ingredient compositions and nutrient analysis of 2 kibble formulas | | |
|---|---|---|
| | Cat Diet A | Cat Diet D |
| Ingredient composition | | |
| meat tissue | 21.076 | |
| rice | 17.061 | 20.500 |
| corn gluten | 16.560 | 10.500 |
| poultry meal by-products | 15.957 | 22.000 |
| pork meal by-products | | 6.000 |
| corn | 4.316 | 10.500 |
| wheat | 5.018 | 5.000 |
| animal fat | 5.319 | 6.000 |

(continued)

| Ingredient compositions and nutrient analysis of 2 kibble formulas | | |
|---|---|---|
| | Cat Diet A | Cat Diet D |
| Ingredient composition | | |
| dried whole eggs | 2.108 | 0.572 |
| fiber sources | 2.007 | 6.500 |
| pea protein concentrate | 1.907 | |
| fish material | 1.204 | 1.500 |
| soya oil | | 1.500 |
| palatability enhancer | 1.505 | 5.000 |
| yeast | 1.204 | 2.000 |
| macrominerals | 1.546 | 1.225 |
| colorant | | 0.500 |
| antioxydants | 0.003 | 0.003 |
| Arg and/or Met and/or Lys[1] | 0.703 | 0.200 |
| Cat Premix[2] | 2.506 | 0.500 |
| Nutrient analysis | | |
| Moisture (%) | 6.21 | 4.22 |
| Proteins (%) | 37.92 | 31.22 |
| Fat (%) | 14.44 | 12.65 |
| Ashes (%) | 8.02 | 6.93 |
| Total fibers (%) | 6.65 | 6.39 |
| Starch (%) | 22.97 | 32.31 |
| [1]Arg: arginine; Met: methionine; Lys: lysine | | |
| [2]cat premix: vitamins, microminerals, and taurine | | |

Palatability tests were performed to compare the Cat diets A and D, as follows.

a) A monadic feeding trial was performed with diets A and D.

As shown in Table 5 below, average consumptions per meal were significantly different between Cat Diet A and Cat diet D.

Table 5 - Monadic feeding trials - Results for Cat Diets A and D

| | average consumption of dry cat food (%/ initial ration) | average consumption of dry cat food per meal (g) | Statistical significance | Groups after pair wise comparison (mixed model) |
|---|---|---|---|---|
| Cat diet A | 80.0 | 26.2 | *** | A |
| Cat diet D | 69.4 | 22.6 | | B |

b) Versus tests were performed to compare the Cat diets A and D.

As shown in Table 6 below, consumptions were significantly different between Cat diet A and Cat Diet D.

Table 6 - Versus tests - Results for Cat Diets A vs D

| | day 1 | | | day 2 | | |
|---|---|---|---|---|---|---|
| | average consumption of dry cat food A) (%) | average consumption of the dry cat food compared to A (%) | statistical significance | average consumption of dry cat food A (%) | average consumption of the dry cat food compared to A (%) | statistical significance |
| Cat Diets A vs D | 54 | 46 | NS | 64 | 36 | * |

Those 2 tests demonstrate that Cat Diet D having an ingredient formulation and a nutritional composition different from those specified in the present invention is less palatable than Cat Diet A which is according to the invention.

**EXAMPLE 3:** Tests with 3 cat food diets characterized by ingredient formulations according to the invention or not, and by nutritional compositions according to the invention

In this example, three nutritionally-balanced food compositions in the form of kibbles, suitable for consumption by cats, and obtained after an extrusion process, were prepared. Those 3 cat foods were formulated in order to meet the AAFCO nutrient recommendations.

There were also formulated in a way to have a specific ingredient formulation comprising some specific ingredients, each present at a specific level, and a specific nutritional composition.

As shown in Table 7 below, diets A and C were formulated in order to have from about 11 to about 22 % rice, from about 5 to about 22 % corn gluten, from about 8 to about 27 % poultry meal by-products, from about 3 to about 22 % corn, from about 0.9 to about 5% whole dried eggs, from about 0.5 to about 5.5% fiber source, from about 0.5 to about 5.5 % fish material, from about 0.9 to about 7% yeast, from about 0.3 to about 5% vitamins and/or microminerals and/or taurine.

Diet E was formulated in order to have an ingredient formulation different from those of Diets A and C, and thus not according to the invention.

Diets A, C, and E were all characterized by a nutritional composition according to the invention, thus comprising at least, in % by weight of the diet, from about 3 to about 8.5% moisture, from about 33 to about 42% protein, from about 9.5 to about 18% fat, from about 4 to about 10% ashes, from about 4 to about 10.5% total fibers and from about 20 to about 30.5% starch.

Table 7 - Formulations of Cat Diets A, C, and E

| Ingredient compositions and nutrient analysis of 3 kibble formulas | | | |
|---|---|---|---|
| | Cat Diet A | Cat Diet C | Cat Diet E |
| Ingredient composition | | | |
| meat tissue | 21.076 | | 17.000 |
| rice | 17.061 | 16.737 | |
| corn gluten | 16.560 | 7.246 | 14.780 |
| poultry meal by-products | 15.957 | 16.830 | 16.900 |
| pork meal by-products | | 15.895 | |
| corn | 4.316 | 19.355 | 19.200 |
| wheat | 5.018 | 0.000 | 17.000 |
| wheat gluten | | | 1.500 |
| animal fat | 5.319 | 5.000 | 5.000 |
| dried whole eggs | 2.108 | 1.683 | |
| fiber sources | 2.007 | 3.740 | 2.000 |
| pea protein concentrate | 1.907 | | |
| fish material | 1.204 | 3.273 | 1.000 |
| palatability enhancer | 1.505 | 1.500 | 1.500 |
| yeast | 1.204 | 4.208 | 1.000 |

(continued)

| Ingredient compositions and nutrient analysis of 3 kibble formulas | | | |
|---|---|---|---|
| | Cat Diet A | Cat Diet C | Cat Diet E |
| Ingredient composition | | | |
| phosphoric acid | | 0.468 | |
| macrominerals | 1.546 | 0.467 | 0.300 |
| antioxydants | 0.003 | 0.020 | 0.003 |
| Arg and/or Met and/or Lys[1] | 0.703 | 0.002 | 0.140 |
| Cat Premix[2] | 2.506 | 3.578 | 2.677 |
| Nutrient analysis | | | |
| Moisture (%) | 6.21 | 6.02 | 4.91 |
| Proteins (%) | 37.92 | 36.93 | 35.1 |
| Fat (%) | 14.44 | 10.94 | 14.85 |
| Ashes (%) | 8.02 | 8.21 | 5.92 |
| Total fibers (%) | 6.65 | 9.59 | 6.63 |
| Starch (%) | 22.97 | 23.00 | 28.29 |

[1]Arg: arginine; Met: methionine; Lys: lysine
[2]cat premix : vitamins, microminerals, and taurine

Palatability tests were performed to compare Cat diet E to Cat diets A and C.
a) A monadic feeding trial was performed with diets C and E.
As shown in Table 8 below, average consumptions per meal were significantly different between Cat Diet C and Cat diet E, the latter being less palatable.

Table 8 - Monadic feeding trials - Results for Cat Diets C and E

| | average consumption of dry cat food (%/ initial ration) | average consumption of dry cat food per meal (g) | Statistical significance | Groups after pair wise comparison (mixed model) |
|---|---|---|---|---|
| Cat Diet C | 95.0 | 62.9 | *** | A |
| Cat Diet E | 81.0 | 53.6 | | B |

b) A versus test was performed to compare the Cat diets A and E.
As shown in Table 9 below, consumptions were significantly different between Cat diet A and Cat Diet E, the latter being less palatable.

Table 9 - Versus tests - Results for Cat Diets A vs E

| | day 1 | | | day 2 | | |
|---|---|---|---|---|---|---|
| | average consumption of dry cat food A (%) | average consumption of the dry cat food compared to A (%) | statistical significance | average consumption of dry cat food A (%) | average consumption of the dry cat food compared to A (%) | statistical significance |
| Cat diets A vs E | 66 | 34 | *** | 66 | 34 | ** |

This demonstrates that Cat Diet E having an ingredient formulation different from those of Cat Diets A and C, and thus not according to the invention, but having a similar nutritional composition to those of Cat Diets A and C, is less palatable than both Cat Diets according the invention. If only one of both essential conditions according to the invention, which are a specific ingredient formulation and a specific nutritional composition, is not respected, the palatability of the resulting cat food is decreased compared to a cat food according to the invention.

**EXAMPLE 4:** Tests with 2 cat food diets characterized by a specific ingredient formulation according to the invention, but by nutritional compositions that are different from those according to the invention

In this example, two nutritionally-balanced food compositions in the form of kibbles, suitable for consumption by cats, and obtained after an extrusion process, were prepared. Those 2 cat foods were formulated in order to meet the AAFCO nutrient recommendations.
There were also formulated in a way to have a specific ingredient formulation comprising some specific ingredients, each present at a specific level, and a specific nutritional composition.
As shown in Table 10 below, diets A and diet F were formulated in order to have from about 11 to about 22 % rice, from about 5 to about 22 % corn gluten, from about 8 to about 27 % poultry meal by-products, from about 3 to about 22 % corn, from about 0.9 to about 5% whole dried eggs, from about 0.5 to about 5.5% fiber source, from about 0.5 to about 5.5 % fish material, from about 0.9 to about 7% yeast, from about 0.3 to about 5% vitamins and/or microminerals and/or taurine.
Diet A was characterized by a nutritional composition comprising at least, in % by weight of the diet, from about 3 to about 8.5% moisture, from about 33 to about 42% protein, from about 9.5 to about 18% fat, from about 4 to about 10% ashes, from about 4 to about 10.5% total fibers and from about 20 to about 30.5% starch.
However, Diet F was formulated to have a nutritional composition different from those according to the invention.

Table 10 - Formulations of Cat Diets A and F

| Ingredient compositions and nutrient analysis of 2 kibble formulas | | |
|---|---|---|
| | Cat Diet A | Cat Diet F |
| Ingredient composition | | |
| meat tissue | 21.076 | 16.000 |
| rice | 17.061 | 13.000 |
| corn gluten | 16.560 | 13.000 |
| poultry meal by-products | 15.957 | 10.000 |
| corn | 4.316 | 10.000 |
| wheat | 5.018 | 5.071 |
| wheat gluten | | 10.000 |
| animal fat | 5.319 | 2.000 |
| dried whole eggs | 2.108 | 1.000 |
| fiber sources | 2.007 | 3.000 |
| pea protein concentrate | 1.907 | |
| fish material | 1.204 | 2.000 |
| soy flour | | 10.000 |
| palatability enhancer | 1.505 | 2.000 |
| yeast | 1.204 | 1.000 |
| macrominerals | 1.546 | 1.245 |
| antioxydants | 0.003 | 0.003 |
| Arg and/or Met and/or Lys[1] | 0.703 | 0.184 |
| Cat Premix[2] | 2.506 | 0.497 |
| Nutrient Analysis | | |
| Moisture (%) | 6.21 | 6.47 |
| Proteins (%) | 37.92 | 37.15 |
| Fat (%) | 14.44 | 8.89 |
| Ashes (%) | 8.02 | 6.14 |

(continued)

| Nutrient Analysis | | |
|---|---|---|
| Total fibers (%) | 6.65 | 7.63 |
| Starch (%) | 22.97 | 27.2 |

[1]Arg: arginine; Met: methionine; Lys: lysine
[2]cat premix:vitamins, microminerals, and taurine

A monadic feeding trial was performed with diets A and F.

As shown in Table 11 below, average consumptions per meal were significantly different between Cat Diets A and F, Cat Diet F being less palatable.

Table 11 - Monadic feeding trials - Results for Cat Diets A and F

| | average consumption of dry cat food (%/ initial ration) | average consumption of dry cat food per 2 meals (g) | Statistical significance | Groups after pair wise comparison (mixed model) |
|---|---|---|---|---|
| Cat Diet A | 87.4 | 58.9 | *** | A |
| Cat Diet F | 82.0 | 55.7 | | B |

This demonstrates that Cat Diet F having an ingredient formulation in the same ingredient ranges as Cat Diet A, thus according to the invention, but having a different nutritional composition, is less palatable than Cat Diet A.

Thus, if only one of both essential requirements as per the invention, i.e., a specific ingredient formulation and a specific nutritional composition, is not respected, the palatability of the resulting cat food is decreased compared to a cat food according to the invention.

**EXAMPLE 5:** Tests with cat food diets characterized by specific ingredient formulations according to or not according to the invention, and by nutritional compositions according to or not according to the invention: Cross evidence that both the specific ingredient formulation and the nutritional composition are essential

In this example, four nutritionally-balanced food compositions in the form of kibbles, suitable for consumption by cats, and obtained after an extrusion process, were prepared. Those 4 cat foods were formulated in order to meet the AAFCO nutrient recommendations.

They were also formulated in a way to have a specific ingredient formulation comprising some specific ingredients present at a specific level, with a focus on the dried whole eggs ingredient in particular, and a specific nutritional composition.

As shown in Table 12 below:

- Diet G and Diet Control H were formulated so that both have from about 11 to about 22 % rice, from about 5 to about 22 % corn gluten, from about 8 to about 27 % poultry meal by-products, from about 3 to about 22 % corn, from about 0.5 to about 5.5% fiber source, from about 0.5 to about 5.5 % fish material, from about 0.9 to about 7% yeast, from about 0.3 to about 5% vitamins and/or microminerals and/or taurine. Diets G and H differ by the whole dried eggs range level. Diet G was indeed formulated in order to have from about 0.9 to about 5% whole dried eggs, whereas Diet Control H was formulated without any whole dried eggs. Diet G and Diet control H were both characterized by a nutritional composition comprising at least, in % by weight of the diet, from about 3 to about 8.5% moisture, from about 9.5 to about 18% fat, from about 4 to about 10% ashes, from about 4 to about 10.5% total fibers, from about 20 to about 30.5% starch. The Diets did however not contain from about 33 to about 42% protein. Accordingly, neither Diet G nor Diet Control H is according to the invention.

- Diet J and Diet Control K were formulated in order to have from about 11 to about 22 % rice, from about 5 to about 22 % corn gluten, from about 8 to about 27 % poultry meal by-products, from about 3 to about 22 % corn, from about 0.5 to about 5.5% fiber source, from about 0.5 to about 5.5 % fish material, from about 0.9 to about 7% yeast, from about 0.3 to about 5% vitamins and/or microminerals and/or taurine. Diets J and K differ by the whole dried eggs range level. Diet J was indeed formulated in order to have from about 0.9 to about 5% whole dried eggs, whereas Diet Control K was formulated without any whole dried eggs. Diet J and Diet control K were both characterized by a nutritional composition comprising at least, in % by weight of the diet, from about 3 to about 8.5% moisture, from about 33 to about 42% protein, from about 9.5 to about 18% fat, from about 4 to about 10% ashes, from about 4 to about 10.5% total fibers, from about 20 to about 30.5% starch.

Accordingly, Diet J but not Diet Control K is according to the present invention.

Table 12 - Formulations of Cat Diets G Diet Control H, Diet J and Diet Control K

| Ingredients compositions and nutrient analysis of 2 kibble formulas with their control | | | | |
|---|---|---|---|---|
| | Cat Diet G | Cat Diet control H | Cat Diet J | Cat Diet control K |
| Ingredient composition | | | | |
| rice | 17.937 | 18.182 | 15.446 | 15.657 |
| corn gluten | 11.490 | 11.646 | 15.705 | 15.920 |
| poultry meal by-product | 20.429 | 20.707 | 24.413 | 24.746 |
| corn | 17.957 | 18.202 | 12.257 | 12.425 |
| Wheat | 9.367 | 9.490 | 9.355 | 9.483 |
| Soya oil | 1.176 | 1.192 | 1.176 | 1.192 |
| Animal fat | 5.381 | 5.455 | 5.381 | 5.455 |
| dried whole eggs | 1.345 | 0.000 | 1.345 | 0.000 |
| chicory roots | 0.199 | 0.202 | 0.199 | 0.202 |
| beet pulp | 2.491 | 2.525 | 2.491 | 2.525 |
| Carob flour | 2.192 | 2.222 | 2.192 | 2.222 |
| Fish material | 3.458 | 3.505 | 3.458 | 3.505 |
| Pal enhancers | 3.587 | 3.636 | 3.587 | 3.636 |
| brewer's dried yeast | 0.997 | 1.010 | 0.997 | 1.010 |
| flax seed | 0.498 | 0.505 | 0.498 | 0.505 |
| minerals | 0.797 | 0.808 | 0.797 | 0.808 |
| Arg and/or Met and/or Lys[1] | 0.100 | 0.101 | 0.100 | 0.101 |
| Cat Premix[2] | 0.598 | 0.606 | 0.598 | 0.606 |
| Analyzed nutrient | | | | |
| Moisture (%) | 6.38 | 6.20 | 5.20 | 5.10 |
| Proteins (%) | 31.12 | 30.80 | 35.30 | 35.00 |
| Fat (%) | 12.62 | 12.40 | 13.55 | 13.30 |
| Ashes (%) | 6.75 | 6.86 | 7.05 | 7.20 |
| Total fibers (%) | 9.48 | 9.65 | 9.09 | 9.14 |
| Starch (%) | 27.2 | 27.50 | 23.71 | 23.90 |

[1]Arg: arginine; Met: methionine; Lys: lysine
[2]Cat premix: vitamins, microminerals, and taurine

Palatability versus tests were performed to compare Cat diet G to Cat diet control H and Cat Diet J to Cat Diet Control K

As shown in Table 13 below, consumptions were significantly different between Cat diet G and Cat diet Control H, Cat Diet G being less palatable, and between Cat Diet J and Cat Diet control K, Cat diet J being more palatable.

Table 13 - Versus tests results for Cat Diet G vs Control H and Cat Diet J vs Control K

| | day 1 | | | day 2 | | |
|---|---|---|---|---|---|---|
| | average consumption of dry cat food G or J (%) | average consumption of the dry cat food "Controls" H or K (%) | statistical significance | average consumption of dry cat food G or J (%) | average consumption of the dry cat food "Controls" H or K | statistical significance |
| formula G vs Control H | 40 | 60 | * | 41 | 59 | * |
| formula J vs Control K | 55 | 45 | NS | 60 | 40 | * |

This demonstrates that Cat Diet G having the ingredient formulation according to the ranges of the invention is not more palatable than Diet control H which does not fulfill all ingredient formulation requirements of the invention. Nevertheless, none of those diets respects the essential nutritional composition as defined in the invention. Diet G is even less palatable than Control Diet H.

On the contrary, Cat Diet J having both the ingredient formulation and the nutritional composition according to the invention is more palatable than Cat Diet control K having the same nutritional composition but not the same ingredient formulation (dried whole eggs are missing in Diet Control K).

Thus, if at least one of both essential requirements of the invention as claimed, i.e., a specific ingredient formulation and a specific nutritional composition, is not fulfilled, the palatability of the resulting cat food is decreased compared to a cat food fulfilling both requirements according to the invention.

All these examples show that the combination of:

a) an ingredient formulation comprising at least, in % by weight of the dry cat food, from about 11 to about 22 % rice, from about 5 to about 22 % corn gluten, from about 8 to about 27 % poultry meal by-products, from about 3 to about 22 % corn, from about 0.9 to about 5% whole dried eggs, from about 0.5 to about 5.5% fiber source, from about 0.5 to about 5.5 % fish material, from about 0.9 to about 7% yeast, from about 0.3 to about 5% vitamins and/or microminerals and/or taurine;
and

b) a nutritional composition comprising at least, in % by weight of the dry cat food, from about 3 to about 8.5% moisture, from about 33 to about 42% protein, from about 9.5 to about 18% fat, from about 4 to about 10% ashes, from about 4 to about 10.5% total fibers and from about 20 to about 30.5% starch,

allows the manufacturing of palatable dry cat foods.

## Claims

1. A palatable dry cat food **characterized by**:

a) an ingredient formulation comprising at least, in % by weight of the dry cat food:

- from about 11 to about 22 % rice;
- from about 5 to about 22 % corn gluten;
- from about 8 to about 27 % poultry meal by-products;
- from about 3 to about 22 % corn;
- from about 0.9 to about 5% whole dried eggs;
- from about 0.5 to about 5.5 % fiber source;
- from about 0.5 to about 5.5 % fish material;
- from about 0.9 to about 7 % yeast;

- from about 0.3 to about 5% vitamins and/or microminerals and/or taurine;

and
b) a nutritional composition comprising at least, in % by weight of the dry cat food:

- from about 3 to about 8.5 % moisture;
- from about 33 to about 42 % protein;
- from about 9.5 to about 18% fat;
- from about 4 to about 10% ashes;
- from about 4 to about 10.5 % total fibers; and
- from about 20 to about 30.5 % starch.

2. The palatable dry cat food according to claim 1, wherein said formulation further comprises less than about 10 % wheat by weight of the dry cat food.

3. The palatable dry cat food according to claim 1 or 2, wherein said dry cat food is coated with a palatability-enhancing composition.

4. A method for preparing a palatable dry cat food according to any one of claims 1 to 3, comprising at least the steps of:

a) Mixing at least the following ingredients: rice, corn gluten, poultry meal by-products, corn, whole dried eggs, fiber source, fish material, yeast, vitamins and/or microminerals and/or taurine;
b) Extruding the thus obtained mixture; and
c) Drying the extrudate obtained in step b), thereby obtaining said palatable dry cat food.

5. The method according to claim 4, further comprising a step d) of coating the dry cat food obtained in step c), with a palatability-enhancing composition.

6. A method for feeding a cat, comprising:

a) feeding said cat with a palatable dry cat food according to any one of claims 1 to 3.

7. The palatable dry cat food according to any one of claims 1 to 3, wherein said cat is an adult cat.

8. Method according to claims 4-5, wherein said cat is an adult cat.

9. Method according to claim 6, wherein said cat is an adult cat.

**Patentansprüche**

1. Wohlschmeckendes Katzentrockenfutter, **gekennzeichnet durch**:

a) eine Formulierung der Zutaten, die mindestens Folgendes in Gew.-% des Katzentrockenfutters umfasst:

- von etwa 11 bis etwa 22% Reis;
- von etwa 5 bis etwa 22% Maiskleber;
- von etwa 8 bis etwa 27% Geflügelmehl-Nebenprodukte;
- von etwa 3 bis etwa 22% Mais;
- von etwa 0,9 bis etwa 5% getrocknete Volleier;
- von etwa 0,5 bis etwa 5,5% Faserquelle;
- von etwa 0,5 bis etwa 5,5% Fischmaterial;
- von etwa 0,9 bis etwa 7% Hefe;
- von etwa 0,3 bis etwa 5% Vitamine und/oder Mikromineralien und/oder Taurin; und

b) eine Nährstoffzusammensetzung, die mindestens Folgendes in Gew.-% des Katzentrockenfutters umfasst:

- von etwa 3 bis etwa 8,5% Feuchtigkeit;

- von etwa 33 bis etwa 42% Protein;
- von etwa 9,5 bis etwa 18% Fett;
- von etwa 4 bis etwa 10% Asche;
- von etwa 4 bis etwa 10,5% Fasern insgesamt; und
- von etwa 20 bis etwa 30,5% Stärke.

2. Wohlschmeckendes Katzentrockenfutter nach Anspruch 1, wobei die Formulierung ferner weniger als etwa 10 Gew.-% Weizen des Katzentrockenfutters umfasst.

3. Wohlschmeckendes Katzentrockenfutter nach Anspruch 1 oder 2, wobei das Katzentrockenfutter mit einer die Schmackhaftigkeit verbessernden Zusammensetzung überzogen ist.

4. Verfahren zur Herstellung eines wohlschmeckenden Katzentrockenfutters nach einem der Ansprüche 1 bis 3, das mindestens die folgenden Schritte umfasst:

   a) Mischen von mindestens den folgenden Zutaten: Reis, Maiskleber, Geflügelmehl-Nebenprodukte, Mais, getrocknete Volleier, Faserquelle, Fischmaterial, Hefe, Vitamine und/oder Mikromineralien und/oder Taurin;
   b) Extrudieren der so erhaltenen Mischung; und
   c) Trocknen des in Schritt b) erhaltenen Extrudats, wodurch das wohlschmeckende Katzentrockenfutter erhalten wird.

5. Verfahren nach Anspruch 4, das ferner einen Schritt d) zum Überziehen des im Schritt c) erhaltenen Katzentrockenfutters mit einer die Schmackhaftigkeit verbessernden Zusammensetzung umfasst.

6. Verfahren zum Füttern einer Katze, umfassend:

   a) Füttern der Katze mit einem wohlschmeckenden Katzentrockenfutter nach einem der Ansprüche 1 bis 3.

7. Wohlschmeckendes Katzentrockenfutter nach einem der Ansprüche 1 bis 3, wobei die Katze eine ausgewachsene Katze ist.

8. Verfahren nach Anspruch 4 bis 5, wobei die Katze eine ausgewachsene Katze ist.

9. Verfahren nach Anspruch 6, wobei die Katze eine ausgewachsene Katze ist.


**Revendications**

1. Aliment sec et appétent pour chats **caractérisé par** :

   a) une formulation d'ingrédients comprenant au moins, en pourcentages en poids de l'aliment sec pour chats :

      - d'environ 11 à environ 22 % de riz ;
      - d'environ 5 à environ 22 % de gluten de maïs ;
      - d'environ 8 à environ 27 % de sous-produits de farine de volaille ;
      - d'environ 3 à environ 22 % de maïs ;
      - d'environ 0,9 à environ 5 % d'oeufs entiers en poudre ;
      - d'environ 0,5 à environ 5,5 % de sources de fibres ;
      - d'environ 0,5 à environ 5,5 % de matières de poissons ;
      - d'environ 0,9 à environ 7 % de levure ;
      - d'environ 0,3 à environ 5 % de vitamines et/ou microminéraux et/ou taurine ; et

   b) une composition nutritionnelle comprenant au moins, en pourcentages en poids de l'aliment sec pour chats :

      - d'environ 3 à environ 8,5 % d'humidité ;
      - d'environ 33 à environ 42 % de protéines ;
      - d'environ 9,5 à environ 18 % de matières grasses ;
      - d'environ 4 à environ 10 % de cendres ;

- d'environ 4 à environ 10,5 % de fibres totales ; et
- d'environ 20 à environ 30,5 % d'amidon.

**2.** Aliment sec et appétent pour chats selon la revendication 1, dans lequel ladite formulation comprend en outre moins environ 10 % de froment, par rapport au poids de l'aliment sec pour chats.

**3.** Aliment sec et appétent pour chats selon la revendication 1 ou 2, dans lequel ledit aliment sec pour chats est enrobé d'une composition améliorant l'appétence.

**4.** Procédé pour préparer un aliment sec et appétent pour chats selon l'une quelconque des revendications 1 à 3, comprenant au moins les étapes suivantes :

a) mélanger au moins les ingrédients suivants : riz, gluten de maïs, sous-produits de farine de volaille, maïs, oeufs entiers en poudre, sources de fibres, matières de poissons, levure, vitamines et/ou microminéraux et/ou taurine ;
b) extruder le mélange ainsi obtenu ; et
c) sécher l'extrudat obtenu dans l'étape b), ce qui permet d'obtenir ledit aliment sec et appétent pour chats.

**5.** Procédé selon la revendication 4, comprenant en outre une étape d) d'enrobage de l'aliment sec pour chats obtenu dans l'étape c) avec une composition améliorant l'appétence.

**6.** Procédé pour nourrir un chat, comprenant :

a) l'alimentation dudit chat avec un aliment sec et appétent pour chats selon l'une quelconque des revendications 1 à 3.

**7.** Aliment sec et appétent pour chats selon l'une quelconque des revendications 1 à 3, dans lequel ledit chat est un chat adulte.

**8.** Procédé selon les revendications 4 à 5, dans lequel ledit chat est un chat adulte.

**9.** Procédé selon la revendication 6, dans lequel ledit chat est un chat adulte.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003060503 A
- US 2006240169 A
- US 2006257522 A
- WO 2006074088 A
- US 2009104315 A
- US 6475512 B
- US 2004096480 A
- US 2004022828 A
- US 2012093986 A